# FASCICULE DE BREVET EUROPEEN

(11) **EP 3 966 432 B1**
(45) Date de publication et mention de la délivrance du brevet: **03.09.2025**
(21) Numéro de dépôt: 20743209.7
(22) Date de dépôt: 11.06.2020
(51) Int. Cl.: F01D 5/18

(54) **AUBE DE TURBINE DE TURBOMACHINE À REFROIDISSEMENT AMÉLIORÉ, TURBINE ET TURBOMACHINE D'AÉRONEF CORRESPONDANTES**
TURBINENLAUFSCHAUFEL EINER TURBOMASCHINE MIT VERBESSERTER KÜHLUNG, ENTSPRECHENDE TURBINE UND FLUGZEUGTURBOMASCHINE
TURBINE BLADE OF A TURBOMACHINE WITH IMPROVED COOLING, CORRESPONDING TURBINE AND AIRCRAFT TURBOMACHINE

(30) Priorité: 13.06.2019 FR 1906284
(43) Date de publication de la demande: 16.03.2022
(73) Titulaire: SAFRAN AIRCRAFT ENGINES, 75015 Paris (FR)
(72) Inventeur: BOTREL, Erwan, Daniel, 77550 MOISSY-CRAMAYEL (FR); GARLES, Kevin, Yannick, 77550 MOISSY-CRAMAYEL (FR); COUDERT, Laurent, Patrick, Robert, 77550 MOISSY-CRAMAYEL (FR)
(74) Mandataire: Brevalex
(86) Numéro de dépôt international: PCT/FR2020/050995
(87) Numéro de publication internationale: WO 2020/249905

(56) Documents cités:
- EP-A1- 3 034 792
- US-A1- 2006 222 493
- US-A1- 2014 093 392
- US-A1- 2018 112 539
- US-B1- 9 447 692

## Description

### DOMAINE TECHNIQUE

L'invention concerne une aube de turbomachine, telle qu'un turboréacteur, un turbopropulseur, ou une turbine à gaz, et elle s'applique notamment à une aube de turbine de type haute pression. L'invention concerne notamment une aube de turbine d'une turbomachine ainsi qu'une turbine et une turbomachine comprenant ladite aube.

### ÉTAT DE LA TECHNIQUE ANTÉRIEURE

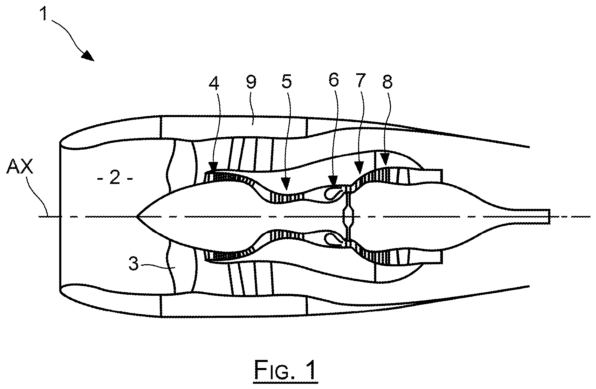

Dans un tel moteur de type turboréacteur, repéré par 1 dans la figure 1, l'air est admis dans une manche d'entrée 2 pour traverser une soufflante comportant une série de pales rotatives 3 avant de se scinder en un flux primaire central et un flux secondaire entourant le flux primaire.

Le flux primaire est comprimé par des compresseurs basse pression 4 et haute pression 5 avant d'atteindre une chambre de combustion 6, après quoi il se détend en traversant une turbine haute pression 7 et une turbine basse pression 8, avant d'être évacué en générant une poussée auxiliaire. Le flux secondaire est quant à lui propulsé directement par la soufflante pour générer une poussée principale.

Chaque turbine 7, 8 comporte des séries d'aubes orientées radialement et régulièrement espacées autour d'un axe de rotation AX, un carter externe 9 entourant l'ensemble du moteur.

Le refroidissement des aubes de turbines est assuré en faisant circuler dans chaque aube de l'air prélevé en amont de la chambre de combustion et admis en pied d'aube, cet air étant évacué par des perçages et/ou des fentes traversant les parois de ces aubes.

D'une manière générale, l'efficacité du refroidissement, et en particulier la diminution du débit nécessaire au refroidissement des aubes de turbines haute pression permet de réduire la consommation en carburant d'un turboréacteur, et d'augmenter la durée de vie des aubes.

Néanmoins, il apparaît que le refroidissement des aubes de turbine haute pression nécessite un constant effort d'amélioration du fait notamment de l'évolution continuelle des conditions de fonctionnement, des procédés de fabrication et des besoins en performances.

Dans ce contexte, le but de l'invention est d'apporter une nouvelle conception d'aube ayant un circuit de refroidissement amélioré.

Le document US 2014/093392 A1 divulgue une aube qui comporte un circuit en serpentin longeant sa paroi d'extrados, qui comporte trois conduits orientés selon la direction d'envergure, manifestement reliés par des portions coudées, et qui alimentent les évents de son bord de fuite. Cette aube comporte un autre circuit en serpentin longeant sa paroi d'intrados qui est sensiblement identique. Chaque circuit en serpentin est nécessairement alimenté en air par son conduit qui est le plus en amont, c'est-à-dire le plus éloigné du bord de fuite.

Le document EP 3 034 792 A1 se borne à divulguer une aube comprenant des circuits à canaux obliques, l'aube comprenant deux circuits s'apparentant à des circuits en serpentins symétriques l'un de l'autre, et alimentés l'un et l'autre par un conduit qui est le plus proche du bord de fuite parmi les conduits de ces circuits en serpentins.

### EXPOSÉ DE L'INVENTION

A cet effet, l'invention a pour objet une aube de turbine d'une turbomachine comme indiqué dans la revendication 1.

Avec cet agencement, le nombre de circuits de l'aube est limité puisqu'il n'est pas nécessaire de prévoir un circuit dédié au refroidissement du bord de fuite, ce qui permet de faciliter la fabrication du pied d'aube, notamment au niveau de son pied.

L'invention concerne également une aube ainsi définie, dans laquelle le premier circuit en serpentin alimente en air les évents les plus proches du pied, et dans laquelle le second circuit en serpentin alimente en air les autres évents.

L'invention concerne également une aube ainsi définie, dans laquelle le second circuit en serpentin alimente en air les évents les plus proches d'une partie de sommet de la pale, et dans laquelle le premier circuit en serpentin alimente en air les autres évents.

L'invention concerne également une aube ainsi définie, dans laquelle le premier circuit en serpentin comporte un premier conduit amont, un premier conduit médian et un premier conduit terminal et dans laquelle le second circuit en serpentin comporte un second conduit amont, un second conduit médian, un second conduit aval, et un second conduit terminal, et dans laquelle ces conduits sont longilignes.

L'invention concerne également une aube ainsi définie, dans laquelle les conduits du premier circuit en serpentin s'étendent du côté intrados en longeant une paroi d'intrados de la pale, et dans laquelle les conduits du second circuit en serpentin s'étendent du côté extrados en longeant une paroi d'extrados de la pale.

L'invention concerne également une aube ainsi définie, dans laquelle l'aube comporte une paroi d'intrados comportant des trous de refroidissement alimentés en air par le premier circuit en serpentin.

L'invention concerne également une aube ainsi définie, obtenue par fabrication additive.

L'invention concerne également une aube ainsi définie, constituée de matériau composite ou céramique.

L'invention concerne également une aube ainsi définie, comprenant un bord d'attaque et un circuit amont dédié au refroidissement de ce bord d'attaque.

L'invention concerne également une turbine comprenant une aube selon l'une des revendications précédentes.

L'invention concerne également une turbomachine d'aéronef comprenant une turbine ainsi définie.

### BRÈVE DESCRIPTION DES DESSINS

[Fig. 1] est une vue en coupe d'un turboréacteur connu ;
[Fig. 2] est une vue externe en perspective d'une aube selon l'invention ;
[Fig. 3] est une représentation de l'intérieur de l'aube selon l'invention selon trois plans de sections situés au niveau de sa base et de sa région médiane ainsi que de son sommet et montrant ses circuits internes de refroidissement.

### EXPOSÉ DÉTAILLÉ DE MODES DE RÉALISATION PARTICULIERS

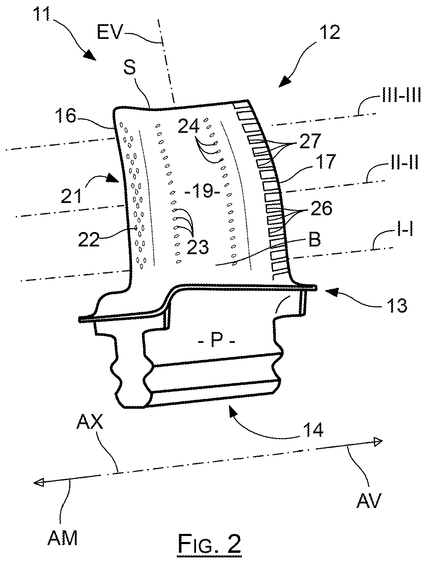

L'aube selon l'invention, repérée par 11 sur la figure 2, comprend un pied P par lequel elle est fixée dans une alvéole d'un disque de rotor, et une pale 12 portée par ce pied P, avec une plateforme 13 raccordant le pied P à la pale 12. Cette aube 11 qui est creuse comporte des circuits internes dans lesquels circule de l'air de refroidissement admis par des embouchures situées à une face radialement interne 14 du pied P.

Dans l'exemple des figures, cette aube est une pièce monobloc issue de fonderie d'un matériau métallique, qui est obtenue en utilisant un ensemble de noyaux pour délimiter ses conduits internes de refroidissement, ces noyaux étant retirés après coulée et refroidissement par exemple avec un processus d'attaque chimique. Elle peut aussi être constituée de matériaux composite ou céramique ou encore être obtenue par fabrication additive.

La pale 12 s'étend selon un axe dit d'envergure EV sensiblement perpendiculaire à un axe AX de rotation du rotor portant l'aube, qui est l'axe longitudinal du moteur. Elle comprend un bord d'attaque 16 sensiblement parallèle à la direction d'envergure EV et situé à l'amont AM ou avant de l'aube, par rapport à la direction générale de circulation des gaz dans le moteur. Elle comporte un bord de fuite 17 sensiblement parallèle au bord d'attaque 16 et espacé de celui-ci le long de l'axe AX pour être à l'aval AV ou à arrière de l'aube. Elle comprend également un sommet S sensiblement parallèle à la base B et espacé de celle-ci selon la direction d'envergure EV.

Les deux parois principales de cette aube sont sa paroi d'intrados 19, visible dans la figure 2, et sa paroi d'extrados 21, qui sont espacées l'une de l'autre tout en étant réunies au niveau du bord d'attaque 16, au niveau du bord de fuite 17, et dans la région du sommet S qui comporte une paroi orientée perpendiculairement à la direction d'envergure EV.

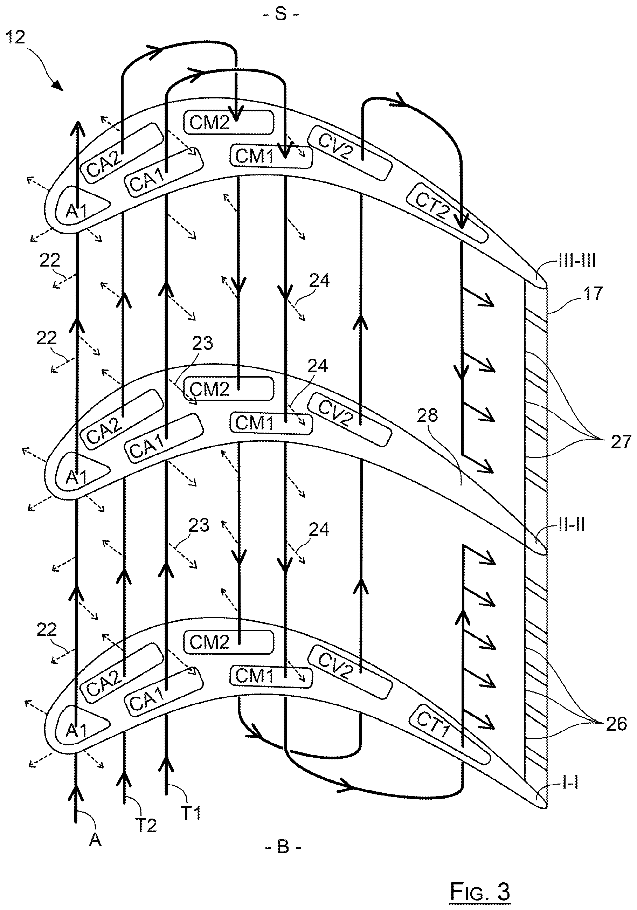

Le bord d'attaque 16 est bombé et comporte des trous de refroidissement 22 traversant sa paroi. Ces trous 22 sont alimentés en air par un circuit amont A de l'aube, représenté schématiquement sur la figure 3. Cette figure 3 est une représentation de l'intérieur de l'aube de la figure 2 sous forme de trois sections dans des plans normaux à la direction d'envergure EV. La première section I-I est située à proximité de la base B, la deuxième section II-II est située sensiblement à mi-distance entre la base B et le sommet S, et la troisième section III-III est située à proximité du sommet S.

Comme visible sur cette figure 3, le circuit amont A comporte principalement un conduit A1 longeant la face interne du bord d'attaque en étant alimenté en air par une embouchure située au niveau de la face interne 14 de l'aube. L'air acheminé par ce conduit A1 est évacué par les trous 22 pour former un film d'air de refroidissement à la face externe du bord d'attaque.

La paroi d'intrados comporte une première série de trous 23, et une deuxième série de trous 24 qui la traversent et sont alimentés par un premier circuit en serpentin T1 de façon former un film à la face externe de l'intrados 19 afin de la protéger thermiquement. La première série de trous 23 s'étend selon la direction d'envergure en étant située en aval du bord d'attaque, et la deuxième série de trous 24 est située en aval de la première série et en amont du bord de fuite 17.

Les trous 22, 23, 24 qui sont optionnels peuvent être cylindriques, oblongs, avec des formes évasées ou autres, avec des tailles appropriées et en étant séparés les uns des autres d'un pas approprié. Ils sont optimisés pour générer un film d'air externe optimal en terme de refroidissement.

Le premier circuit en serpentin T1 comporte un conduit amont CA1, un conduit médian CM1 raccordé au conduit amont CA1 par une portion coudée située au niveau du sommet S, et un conduit terminal CT1 raccordé au conduit médian par une portion coudée située à proximité de la base B. Ces trois conduits CA1, CM1 et CT1 s'étendent selon la direction d'envergure EV, ils longent la face interne de la paroi d'intrados pour la refroidir en étant délimités par des parois internes de l'aube. Le conduit amont CA1 est situé immédiatement en aval du conduit A1 du circuit amont A, le conduit médian CM1 est situé immédiatement en aval du conduit amont CA1, et le conduit terminal CT1 est situé immédiatement en aval du conduit médian CM1 c'est-à-dire à proximité du bord de fuite.

Le conduit amont CA1 est alimenté en air par une embouchure située au niveau de la face radialement interne 14 de l'aube, la direction radiale correspondant à la direction d'envergure EV lorsque l'aube est portée par le disque. L'air circule ainsi dans cette aube depuis la base vers le sommet, et optionnellement il alimente la première série de trous 23. Le conduit médian CM1 est alimenté en air par le conduit amont CA1 via la portion coudée, de sorte que l'air y circule depuis le sommet S vers la base B, et optionnellement il alimente en air la deuxième série de trous 24. Le conduit terminal CT1 est alimenté en air par le conduit médian CM1 via la portion coudée correspondante, de sorte que l'air y circule depuis la base B vers le sommet S.

D'une manière analogue, la paroi d'extrados peut comporter des trous de refroidissement qui la traversent pour former un film de refroidissement à sa face radialement externe, ces trous étant alimentés par un second circuit en serpentin T2.

Ce second circuit en serpentin T2 comporte un conduit amont CA2, un conduit médian CM2 raccordé au conduit amont CA2 par une portion coudée située au niveau du sommet S, un conduit aval CV2 raccordé au conduit médian CM2 par une portion coudée située au niveau de la base B, et un conduit terminal CT2 raccordé au conduit aval CV2 par une portion coudée située à proximité du sommet S. Ces quatre conduits CA2, CM2, CV2 et CT2 s'étendent selon la direction d'envergure EV, ils longent la face interne de la paroi d'extrados pour la refroidir en étant délimités par des parois internes de l'aube.

Le conduit amont CA2 est situé immédiatement en aval du conduit A1 du circuit amont A, le conduit médian CM2 est situé immédiatement en aval du conduit amont CA2, le conduit aval CV2 est situé immédiatement en aval du conduit médian CM2, et le conduit terminal CT1 est situé immédiatement en aval du conduit aval CV2 c'est-à-dire à proximité du bord de fuite.

Le conduit amont CA2 est alimenté en air par une embouchure située au niveau de la face radialement interne 14 du pied de l'aube, de sorte que l'air y circule depuis la base vers le sommet. Le conduit médian CM2 est alimenté en air par le conduit amont CA2 via la portion coudée, de sorte que l'air y circule depuis le sommet S vers la base B. Le conduit aval CV2 est alimenté en air par le conduit médian CM2 via une autre portion coudée, de sorte que l'air y circule depuis la base B vers le sommet S. Le conduit terminal CT2 est alimenté en air par le conduit aval CV2 via la portion coudée correspondante, de sorte que l'air y circule depuis le sommet vers la base B.

En plus d'alimenter les trous de refroidissement et de refroidir l'intrados et l'extrados, les deux circuits en serpentins T1 et T2 assurent également l'alimentation en air de refroidissement du bord de fuite.

Le bord de fuite 17 qui est effilé comporte une série d'évents de refroidissement, de faibles longueurs qui s'étendent parallèlement à la direction d'envergure EV, en étant espacés et dans le prolongement les uns des autres selon la direction d'envergure EV, c'est-à-dire la direction radiale lorsque l'aube est portée par un disque s'étendant selon un axe principal. Ils sont situés à faible distance du bord de fuite proprement dit.

Ces évents se décomposent en d'une part des évents radialement internes 26 situés du côté de la base de la pale entre la première section I-I et la deuxième section II-II, et d'autre part des évents radialement externes 27 situés entre la deuxième section II-II et la troisième section III-III. Les évents radialement internes 26 sont ainsi les plus proches de la base B alors que les évents radialement externes sont les plus proches du sommet S. Chaque évent souffle de l'air en direction du bord de fuite 17 qui est pourvu de nervures externes canalisant cet air parallèlement à l'axe AX.

Les évents radialement internes 26 sont alimentés en air par le conduit terminal CT1 du premier circuit en serpentin T1 alors que les évents radialement externes 27 sont alimentés en air par le conduit terminal CT2 du second circuit en serpentin T2.

Comme visible sur la figure 3, le conduit terminal CT1 du premier circuit en serpentin T1 s'étend sur sensiblement la moitié de la hauteur de l'aube, depuis sa base B jusqu'au niveau de la deuxième section II-II. Ce conduit terminal CT1 alimente en air de refroidissement des évents radialement internes 26 du bord de fuite.

De manière analogue, le conduit terminal CT2 du second circuit en serpentin T2 s'étend lui aussi sur sensiblement la moitié de la hauteur d'aube, depuis le sommet S jusqu'à la deuxième section II-II. Comme visible sur la figure 3, le conduit terminal CT2 du second circuit en serpentin T2 s'étend dans le prolongement du conduit terminal CT1 du premier circuit en serpentin T1.

Ces deux conduits terminaux CT1 et CT2 sont ainsi situés dans le prolongement l'un de l'autre en s'étendant selon la direction d'envergure, et en longeant les évents 26 et 27 qu'ils alimentent. Ils sont séparés l'un de l'autre par une cloison 28 délimitant leurs extrémités mutuelles situées en vis-à-vis. Comme visible sur la figure 3, cette cloison 28 est située au niveau de la section II-II, c'est-à-dire à mi-hauteur de l'aube dans cet exemple.

La cloison 28 peut être située à une autre position, son positionnement étant conditionné par le dimensionnement de l'aube proprement dite, c'est-à-dire notamment par la répartition souhaitée de débit d'air circulant dans le premier circuit en serpentin et dans le second. Cette cloison 28 pourrait ainsi aussi bien être située à un tiers ou à deux tiers de la hauteur de l'aube selon le cas de figure envisagé.

La valeur et la répartition des débits d'air dans le premier circuit en serpentin T1 et dans le second circuit T2 est également conditionnée par la taille des évents de refroidissement du bord de fuite, c'est-à-dire par leur section de passage qui constitue un autre paramètre de dimensionnement.

Dans l'exemple des figures, le premier circuit en serpentin T1 comporte trois conduits et le second en comporte quatre. D'autres nombres de conduits sont envisageables pour ces circuits en serpentin, dès lors que l'un des circuits en serpentin a un nombre pair de conduits alors que l'autre a un nombre impair de conduits. Cette différence de parité des nombres de conduits du premier et du second circuits en serpentins permet de constituer des conduits terminaux situés en vis-à-vis l'un de l'autre pour assurer une alimentation de l'ensemble des évents du bord de fuite. Plus concrêtement, le circuit en serpentin ayant un nombre de conduits (hors conduit terminal) pair alimente les évents radialement internes alors que le circuit en serpentin ayant un nombre de conduits impair (hors conduit terminal) alimente les évents radialement externes.

D'une manière générale, l'aube selon l'invention comporte un nombre d'embouchure d'alimentations au niveau de la face radialement interne 14 de son pied pouvant être limité à trois, à savoir un pour le circuit amont A, un pour le premier circuit en serpentin T1, et un autre pour le second circuit en serpentin T2, ce qui simplifie la fabrication du pied P. Eventuellement, il est possible d'ajouter un complément d'air de refroidissement par le pied au droit des conduits CM1 et CM2 pour compenser l'air émis par les trous de refroidissement lorsqu'ils sont présents.

## Revendications

1. Aube (11) de turbine d'une turbomachine, comprenant un pied (P) portant une pale (12) s'étendant selon une direction d'envergure (EV), cette pale (12) comprenant un bord de fuite (17) pourvu d'évents (26, 27) de refroidissement, ainsi qu'un premier circuit en serpentin (T1) et un second circuit en serpentin (T2), et dans laquelle :
- chaque circuit en serpentin (T1, T2) comporte plusieurs conduits (CA1, CM1, CT1, CA2, CM2, CV2, CT2) s'étendant selon la direction d'envergure (EV) en étant raccordés les uns aux autres par des portions coudées ;
- chaque circuit en serpentin (T1, T2) est alimenté en air par une embouchure située au niveau du pied (P) via son conduit (CA1, CA2) qui est le plus éloigné du bord de fuite (17) ;
- le premier circuit en serpentin (T1) a un nombre de conduits pair et le second circuit en serpentin (T2) a un nombre de conduits impair, ou inversement ;
- le premier et le second circuit en serpentin (T1, T2) sont terminés respectivement par un premier et par un second conduit terminal (CT1, CT2), ces deux conduits terminaux (CT1, CT2) longeant le bord de fuite (17) en s'étendant dans le prolongement l'un de l'autre, et en étant séparés l'un de l'autre par une cloison interne (28) de la pale (12) ;
- les évents (26, 27) sont alimentés en air de refroidissement par le premier circuit en serpentin (T1) et par le second circuit en serpentin (T2).

2. Aube selon la revendication 1, dans laquelle le premier circuit en serpentin (T1) alimente en air les évents (26) les plus proches du pied (P), et dans laquelle le second circuit en serpentin (T2) alimente en air les autres évents (27).

3. Aube selon la revendication 1 ou 2, dans laquelle le second circuit en serpentin (T2) alimente en air les évents (26) les plus proches d'une partie de sommet (S) de la pale (12), et dans laquelle le premier circuit en serpentin (T1) alimente en air les autres évents (27).

4. Aube selon la revendication 3, dans laquelle le premier circuit en serpentin (T1) comporte un premier conduit amont (CA1), un premier conduit médian (CM1) et un premier conduit terminal (CT1) et dans laquelle le second circuit en serpentin (T2) comporte un second conduit amont (CA2), un second conduit médian (CM2), un second conduit aval (CV2), et un second conduit terminal (CT2), et dans laquelle ces conduits sont longilignes.

5. Aube selon l'une des revendications précédentes, dans laquelle les conduits (CA1, CM1, CT1) du premier circuit en serpentin (T1) s'étendent du côté intrados en longeant une paroi d'intrados (19) de la pale (12), et dans laquelle les conduits (CA2, CM2, CV2, CT2) du second circuit en serpentin (T2) s'étendent du côté extrados en longant une paroi d'extrados (21) de la pale (12).

6. Aube selon l'une des revendications précédentes, dans laquelle l'aube comporte une paroi d'intrados (19) comportant des trous (23, 24) de refroidissement alimentés en air par le premier circuit en serpentin (T1).

7. Aube selon l'une des revendications précédentes, comprenant un bord d'attaque (16) et un circuit amont (A) dédié au refroidissement de ce bord d'attaque (16).

8. Aube selon l'une des revendications 1 à 7, obtenue par fabrication additive.

9. Aube selon l'une des revendications 1 à 7, constituée de matériau composite ou céramique.

10. Turbine comprenant une aube selon l'une des revendications précédentes.

11. Turbomachine d'aéronef comprenant une turbine selon la revendication précédente.

## Patentansprüche

1. Turbinenschaufel (11) einer Turbomaschine, umfassend einen Fuß (P), der ein sich in einer Spannweitenrichtung (EV) erstreckendes Rotorblatt (12) trägt, wobei dieses Rotorblatt (12) eine Hinterkante (17), die mit Kühllüftungsöffnungen (26, 27) versehen ist, sowie einen ersten Schlangenkreislauf (T1) und einen zweiten Schlangenkreislauf (T2) umfasst, und wobei:
- jeder Schlangenkreislauf (T1, T2) mehrere Leitungen (CA1, CM1, CT1, CA2, CM2, CV2, CT2) aufweist, die sich entsprechend der Spannweitenrichtung (EV) erstrecken und durch Winkelabschnitte miteinander verbunden sind;
- jeder Schlangenkreislauf (T1, T2) von einer Mündung am Fuß (P) über seine Leitung (CA1, CA2), die am weitesten von der Hinterkante (17) entfernt ist, mit Luft versorgt wird;
- der erste Schlangenkreislauf (T1) eine gerade Anzahl von Leitungen hat und der zweite Schlangenkreislauf (T2) eine ungerade Anzahl von Leitungen hat, oder umgekehrt;
- der erste und der zweite Schlangenkreislauf (T1, T2) jeweils mit einer ersten und einer zweiten Endleitung (CT1, CT2) abgeschlossen sind, wobei diese beiden Endleitungen (CT1, CT2) entlang der Hinterkante (17) verlaufen, indem sie sich in Verlängerung zueinander erstrecken und durch eine innere Trennwand (28) des Rotorblatts (12) voneinander getrennt sind;
- die Lüftungsöffnungen (26, 27) von dem ersten Schlangenkreislauf (T1) und von dem zweiten Schlangenkreislauf (T2) mit Kühlluft versorgt werden.

2. Schaufel nach Anspruch 1, wobei der erste Schlangenkreislauf (T1) die Lüftungsöffnungen (26), die dem Fuß (P) am nächsten liegen, mit Luft versorgt, und wobei der zweite Schlangenkreislauf (T2) die anderen Lüftungsöffnungen (27) mit Luft versorgt.

3. Schaufel nach Anspruch 1 oder 2, wobei der zweite Schlangenkreislauf (T2) die Lüftungsöffnungen (26), die einem oberen Teil (S) des Rotorblatts (12) am nächsten liegen, mit Luft versorgt, und wobei der erste Schlangenkreislauf (T1) die anderen Lüftungsöffnungen (27) mit Luft versorgt.

4. Schaufel nach Anspruch 3, wobei der erste Schlangenkreislauf (T1) eine erste vorgeschaltete Leitung (CA1), eine erste mittlere Leitung (CM1) und eine erste Endleitung (CT1) aufweist und wobei der zweite Schlangenkreislauf (T2) eine zweite vorgeschaltete Leitung (CA2), eine zweite mittlere Leitung (CM2), eine zweite nachgeschaltete Leitung (CV2) und eine zweite Endleitung (CT2) aufweist, und wobei diese Leitungen längsförmig sind.

5. Schaufel nach einem der vorhergehenden Ansprüche, wobei sich die Leitungen (CA1, CM1, CT1) des ersten Schlangenkreislaufs (T1) auf der Druckseite entlang einer Druckseitenwand (19) des Rotorblatts (12) erstrecken, und wobei sich die Leitungen (CA2, CM2, CV2, CT2) des zweiten Schlangenkreislaufs (T2) auf der Saugseite entlang einer Saugseitenwand (21) des Rotorblatts (12) erstrecken.

6. Schaufel nach einem der vorhergehenden Ansprüche, wobei die Schaufel eine Druckseitenwand (19) aufweist, die Kühlbohrungen (23, 24) aufweist, die von dem ersten Schlangenkreislauf (T1) mit Luft versorgt werden.

7. Schaufel nach einem der vorhergehenden Ansprüche, umfassend eine Vorderkante (16) und einen vorgeschalteten Kreislauf (A), der zur Kühlung dieser Vorderkante (16) bestimmt ist.

8. Schaufel nach einem der Ansprüche 1 bis 7, die durch additive Fertigung hergestellt wird.

9. Schaufel nach einem der Ansprüche 1 bis 7, bestehend aus einem Verbundwerkstoff oder Keramik.

10. Turbine, umfassend eine Schaufel nach einem der vorhergehenden Ansprüche.

11. Luftfahrzeugturbomaschine, umfassend eine Turbine nach dem vorhergehenden Anspruch.

## Claims

1. A turbine vane (11) of a turbomachine, comprising a root (P) carrying a blade (12) extending along a span direction (EV), this blade (12) comprising a trailing edge (17) provided with cooling vents (26, 27), as well as a first serpentine circuit (T1) and a second serpentine circuit (T2), and wherein:
- each serpentine circuit (T1, T2) includes several ducts (CA1, CM1, CT1, CA2, CM2, CV2, CT2) extending along the span direction (EV) by being connected to each other through bent portions;
- each serpentine circuit (T1, T2) is supplied with air by a mouth located at the root (P) via its duct (CA1, CA2) which is furthest from the trailing edge (17);
- the first serpentine circuit (T1) has an even number of ducts and the second serpentine circuit (T2) has an odd number of ducts, or vice versa, wherein the first and second serpentine circuits (T1, T2) are terminated by a first and a second terminal duct (CT1, CT2) respectively, these two terminal ducts (CT1, CT2) running along the trailing edge (17) as an extension of each other, and by being separated from each other by an inner partition wall (28) of the blade (12) ;
- the vents (26, 27) are supplied with cooling air from the first serpentine circuit (T1) and from the second serpentine circuit (T2).

2. The vane according to claim 1, wherein the first serpentine circuit (T1) supplies the vents (26) closest to the root (P) with air, and wherein the second serpentine circuit (T2) supplies the other vents (27) with air.

3. The vane according to claim 1 or 2, wherein the second serpentine circuit (T2) supplies the vents (26) closest to an apex part (S) of the blade (12) with air, and wherein the first serpentine circuit (T1) supplies the other vents (27) with air.

4. The vane according to claim 3, wherein the first serpentine circuit (T1) includes a first upstream duct (CA1), a first middle duct (CM1) and a first terminal duct (CT1) and wherein the second serpentine circuit (T2) includes a second upstream duct (CA2), a second middle duct (CM2), a second downstream duct (CV2), and a second terminal duct (CT2), and wherein these ducts are elongate.

5. The vane according to claim 1, wherein the ducts (CA1, CM1, CT1) of the first serpentine circuit (T1) extend on the lower surface side by running along a lower surface wall (19) of the blade (12), and wherein the ducts (CA2, CM2, CV2, CT2) of the second serpentine circuit (T2) extend on the upper surface side by running along an upper surface wall (21) of the blade (12).

6. The vane according to claim 1, wherein the vane includes a lower surface wall (19) including cooling holes (23, 24) supplied with air from the first serpentine circuit (T1).

7. The vane according to claim 1, comprising a leading edge (16) and an upstream circuit (A) dedicated to cooling this leading edge (16).

8. The vane according one of claims 1 to 7, obtained by additive manufacturing.

9. The vane according one of claims 1 to 7, made of composite or ceramic material.

10. A turbine comprising a vane according to claim 1.

11. An aircraft turbomachine comprising a turbine according to the preceding claim.
